# EUROPEAN PATENT SPECIFICATION

(11) **EP 2 560 773 B1**
(45) Date of publication and mention of the grant of the patent: **05.06.2019**
(21) Application number: 11772320.5
(22) Date of filing: 15.04.2011
(51) Int. Cl.: B21D 53/22, C25D 5/36, C25D 5/50, C25D 7/00, C23C 18/16, F16B 39/282, F16B 39/24, F16B 43/00

(54) **A METHOD FOR WASHER PRODUCTION AND A WASHER**
VERFAHREN ZUR PRODUKTION VON UNTERLEGSCHEIBEN UND UNTERLEGSCHEIBE
PROCÉDÉ POUR LA PRODUCTION DE RONDELLES ET RONDELLE

(30) Priority: 20.04.2010 SE 1050390
(43) Date of publication of application: 27.02.2013
(73) Proprietor: Nord-Lock AB, 830 02 Mattmar (SE)
(72) Inventor: PERSSON, Kurt, S-830 02 Mattmar (SE)
(74) Representative: Zacco Sweden AB
(86) International application number: PCT/SE2011/050463
(87) International publication number: WO 2011/133090

(56) References cited:
- WO-A1-2007/142599
- WO-A1-2007/142599
- WO-A2-2004/033139
- GB-A- 514 923
- JP-A- 2007 302 971
- US-A- 3 257 674
- US-A- 3 417 802
- US-A- 3 417 802
- US-A- 5 011 351
- US-A1- 2007 248 434
- I E Ayoub: "STUDY OF ELECTROLESS Ni-P PLATING ON STAINLESS STEEL", ISOTOPE & RAD. RES, 41, 4(suppl. 2),, 1 January 2009 (2009-01-01), pages 1551-1559, XP055325687, Retrieved from the Internet: URL:http://www.merrcac.org/41-4s2/mag15.pd f [retrieved on 2016-12-02]

## Description

### Background

### Technical field

The invention relates to processes for producing a washer for locking according to the introductory portion of the accompanying claims 1 and 8.

The present invention also relates to washers for locking according to the introductory portion of the accompanying claims 10 and 16.

### Prior art

Metallic washers of the kind described above are previously known. Washers of this kind are intended to be used in pairs, the sides being provided with a pattern of cams facing each other and the sides being provided with a pattern of teeth being turned outwardly and grip into a workpiece surface or a bolt head or a nut in a bolted joint. Such washers are for example disclosed in the patent publication US3417802.

In order to obtain this, the teeth of the washers must be harder than the workpiece and the bolt head/nut, so that a penetration in the respective surface is enough to make sure that the friction in the contact between the teeth and the workpiece and bolt head/nut, respectively, exceeds the friction between the respective cam surfaces.

According to certain embodiments the metallic washers are made of steel, e.g. of stainless steel, eg acid-proof stainless steel. By cold forming of the washers the hardness increases by strain hardening. However, in this way the hardness increases to approximately the same level obtained by cold forming of bolts and nuts used in the relevant bolted joints. Therefore the washer hardness must be increased further to secure good function.

Another known method in addition to cold forming for obtaining a hard washer surface and suitable for batchwise production is hardening in the form of heat treatment in a carbon and hydrogen atmosphere, which method provides a hard enough surface. The method, however, suffers from high costs and results in very poor stainless properties of the surface.

An object of the present invention is to provide a method for batchwise provision of metallic washers with a hard washer surface and at the same time avoiding the drawbacks of the methods previously known and commented on above.

### Summary of the invention

This and other objects are obtained by methods and washers having the features according to the appended claims 1 or 8, and 10 or 16, respectively.

Further advantages, discussed later, are obtained by means of what is specified in the dependent claims.

According to the invention, washers are coated with a corrosion resistant outer surface layer having a hardness exceeding the hardness of the material to interact with the washer pattern of teeth in a locking operation.

By "coating" or "coated" is intended that the corrosion resistant outer surface layer is applied on the outer surface of the washer.

### Brief description of the drawings

A better understanding of the present invention will be had when considering the following detailed description in conjunction with the accompanying drawings in which like details are designated with like numerals and in which
Fig. 1 schematically shows in cross-section one embodiment of a bolted joint using washers for locking, e.g. washers according to the present invention;
Fig. 2 shows one embodiment of a washer according to the present invention seen in a perspective view against the side having the pattern of teeth;
Fig. 3 shows a radial cross-section of a portion of a washer according to the present invention;
Fig. 4 shows a block diagram representing one embodiment of the process according to the present invention; and
Fig. 5 schematically shows one embodiment of a plant according to the present invention.

### Detailed description of preferred embodiments

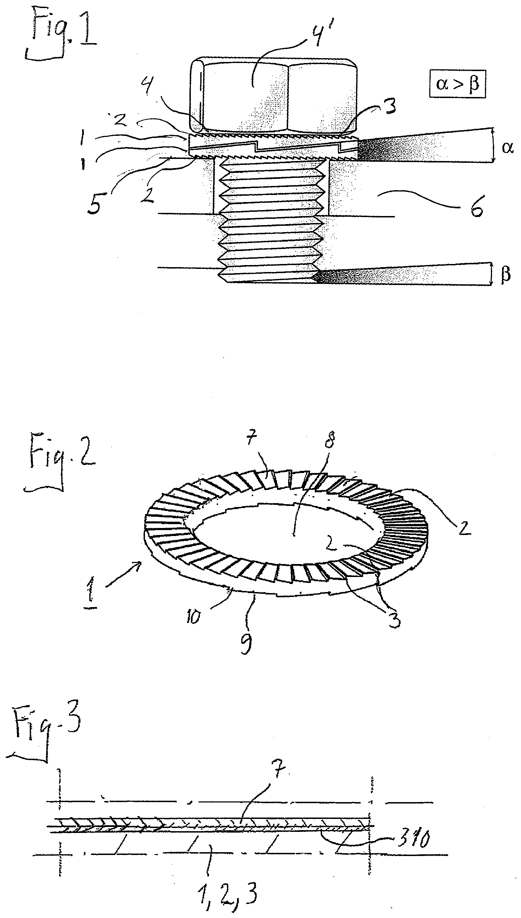

Metallic washers 1 of substantially the kind specified above are previously known and provided for e.g. bolted joints or the corresponding fastening elements for locking purposes. As schematically shown in fig. 1 the sides 2 provided with a pattern of teeth 3 are turned outwardly in the pair of washers 1, the teeth being intended to grip into the bottom side 4 of the bolt head 4' or the corresponding, e.g. a nut, and a surface 5 of e.g. a workpiece 6.

According to some aspects of the invention the washers are made of steel, e.g. stainless steel. Sometimes especially preferred are washers of acid-proof stainless steel.

According to the present invention a washer is provided with an outer surface layer 7, fig. 1, preferably intended to be harder than the material to interact with the washer pattern of teeth and, thus, into which the washer pattern of teeth is intended to grip.

According to one aspect of the present invention said surface layer 7 is made of a nickel alloy.

As shown in fig. 3 a layer 310 of electrolytically applied pure nickel is, according to one embodiment, provided under said surface layer 7 of a nickel alloy to serve as a basic coating for said outer surface layer.

According to this aspect of the present invention, said surface layer 7 comprises a nickel / phosphorus alloy. Preferred is that said nickel / phosphorus alloy comprises about 2 - 14 % phosphorus by weight, and more specifically about 6 - 9 % phosphorus by weight, the balance being nickel and normal impurities in the nickel phosphorus alloy.

Preferably, said surface layer 7 is applied by a so-called electroless nickel plating process, preferably by a so-called barrel plating process. Such processes are known per se, the surface layer being auto-catalytically reduced onto the washers. In a barrel plating process for washers, a batch of washers are immersed in a bath in a barrel for providing the desired surface layer.

According to preferred embodiments said surface layer 7 is about 10 - 50 µm thick.

Further, according to preferred embodiments, said surface layer 7 of the nickel / phosphorus alloy is heat treated at about 400°C for about 1 hour or at about 200 - 300°C for up to about 12 hours, preferably in an inert atmosphere and, according to one embodiment, preferably to a hardness of about 1000 HV.

According to one aspect of the present invention a method for producing washers is provided, the method thus being for batchwise production of steel washers for locking in bolted joints, a washer, fig. 2, having a flat annular configuration with a central hole 8 and on one side 9 a pattern of radially extending cams 10 and on the other side 2 having a pattern of radially extending teeth 3, the method comprising the steps of providing a hard washer surface layer, the hardness of the layer being intended to exceed the hardness of the surface material, e.g. bolt-head, nut or workpiece to interact with the washer pattern of teeth 3 in a locking operation.

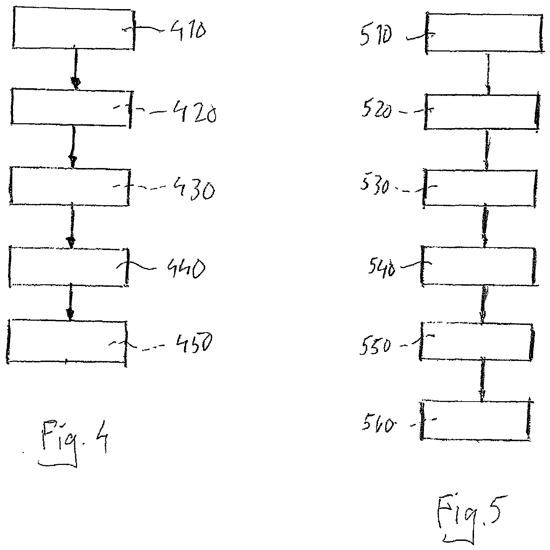

In fig. 4 the steps of the method according to the present invention are illustrated.

Thus, in a first step 410 steel washers 1 are produced.

In a second step 420, which is a preferred but not always necessary step, the washers are cleaned to receive a clean surface suitable to be coated.

In a third step 430, which is also a preferred but not always necessary step, a layer 310 of pure nickel is electrolytically applied as a basic coating for said outer surface layer 7.

In a fourth step 440, a batch of washers 1 is provided with said surface layer 7. According to this aspect of the present invention, said surface layer comprises a nickel / phosphorus alloy as described above. Also preferred is that an electroless nickel plating process is used for applying the surface layer 7, preferably performed as a barrel plating process.

In a fifth step 450, which is a preferred but not always necessary step, the surface layer 7 of said washers is heat treated at about 400°C for about 1 hour or at 200 - 300°C for up to about 12 hours, preferably in an inert atmosphere. Preferably the surface layer 7 is heat treated to about 1000 HV.

According to this aspect of the present invention the washers are made of stainless steel, especially preferred of acid-proof stainless steel.

According to a further aspect not being part of the present invention a plant is provided for producing washers for locking in bolted joints, the washers being of the kind discussed above, one embodiment of such a plant being shown in fig. 5.

Thus, the plant comprises means 510 for producing steel washers e.g. substantially of the kind shown in fig. 4. Preferably, the plant further comprises means 520 for cleaning washers produced and preferably means 530 for electrolytically applying a layer 310 of pure nickel on the washers as a basic coating. Further, the plant comprises means 540 for applying an outer surface layer 7 on a batch of washers, said surface layer 7 being a nickel alloy. According to this aspect of the present invention said layer 7 consists of a nickel / phosphorus alloy and for application of said layer an electroless nickel plating process is used, preferably a barrel plating process. Further, the plant preferably comprises means 550 for heat treatment of the washers and means 560 for controlled cooling of heat treated washers.

According to another aspect of the present invention the outer surface layer provided on a batch of steel washers is applied by means of a physical vapor deposition, PVD, process, said outer surface layer being made of at least one of the compounds titanium nitride, TiN, titanium carbonitride, TiCN, chromium nitride, CrN, and titanium aluminium nitride, TiAlN.

An outer surface layer of this kind provides both the desired hardness and the desired stainless properties for the washer pattern of teeth side of the batch of washers. The layer thickness is preferably about 0,5 - 50 µm.

According to this aspect of the present invention a method according to the present invention comprises the steps corresponding to the previously described steps 410, 420 and 430, the step 430 being the step comprising the PVD process.

Further, according to this aspect, a plant not being part of the present invention comprises means corresponding substantially to the previously described means 510, 520 and 540, means 540 comprising means for providing the PVD process for providing the outer surface layer for a batch of washers.

The washer as well as the method and the function of the plant according to the present invention should to a considerable and necessary extent have been made clear by the description given above.

Thus, the present invention makes it possible to produce metallic washers having an outer surface layer, which provides a hardness for, inter alia, the pattern of teeth side of the washers, this hardness exceeding, if desired, the hardness of the material into which the teeth are intended to grip, such as a bolt head or a nut.

The nickel / phosphorus alloy layer has an amorphous or to a certain degree amorphous structure and provides the desired hardness as well excellent stainless and acid-proof properties.

Said alloy is also extremely suitable for batchwise application, e.g. in a barrel plating process, which provides a low cost production.

Said alloy may also be heat treated to a desired hardness.

Further, a nickel alloy according to the invention also provides excellent stainless properties according to, inter alia, the amorphous structure.

Embodiments specifying cleaning and embodiments specifying the provision of an electrolytically applied basic coating of pure nickel provides a good connection of the outer surface layer.

The present invention using PVD process provides a washer outer face having the desired hardness and also the desired corrosion resistance properties. Normally a cleaning operation should be performed as part of the PVD process aspect of the invention.

Above the present invention has been described in association with examples and preferred embodiments.

Of course, further embodiments as well as minor additions and changes may be imagined without departing from the scope of the appended claims.

Thus, the present invention is also applicable for so-called friction locking washers.

Thus, the present invention should not be considered limited to the embodiments shown but may be varied within the scope of the accompanying claims.

## Claims

1. A method for producing metallic washers (1) for locking in bolted joints, the washers having an annular configuration with a central hole (8) and on one side a pattern of radially extending cams (10) and on the other side having a pattern of radially extending teeth (3), **characterized by** the steps of:
- coating a batch of the washers (1) with a corrosion resistant outer surface layer (7), the hardness of which exceeding the hardness of the material (6) to interact with the washer pattern of teeth (3) in a locking operation,
wherein said outer surface layer (7) is a layer of a nickel alloy, wherein said outer washer surface layer (7) a nickel / phosphorus alloy,
- wherein said washers are provided in stainless steel, preferably acid-proof stainless steel.

2. A method according to claim 1, **wherein** said outer washer surface layer (7) is a nickel / phosphorus alloy comprising about 2 - 14 % phosphorus by weight, preferably about 6 - 9 % phosphorus by weight.

3. A method according to claim 1 or 2, **wherein** said outer washer surface layer (7) is applied by a so-called electroless nickel plating process, preferably by so-called barrel plating.

4. A method according to anyone of claims 1 - 3, **characterized in** the steps of
- cleaning the washer surface in a cleaning operation (440); and then, preferably, - applying electro lytically a layer (310) of pure nickel before providing said outer washer surface layer (7) of said nickel alloy.

5. A method according to anyone of claims 1 - 4, **characterized in** the step of
- applying an outer washer surface layer (7) having a thickness of about 10 - 50 µm.

6. A method according to anyone of claims 2 - 5, **characterized in** the step of
- heat treating said outer washer surface layer (7) of said washers at about 400°C for about 1 hour or at 200 - 300°C for up to about 12 hours.

7. A method according to claim 6, **wherein** said outer washer surface layer is heat treated to a hardness of about 1000 HV.

8. A method for producing metallic washers (1) for locking in bolted joints, the washers having an annular configuration with a central hole (8) and on one side a pattern of radially extending cams (10) and on the other side having a pattern of radially extending teeth (3), **characterized by**
- coating a batch of the washers (1) with a corrosion resistant outer surface layer (7), the hardness of which exceeding the hardness of the material (6) to interact with the washer pattern of teeth (3) in a locking operation, further **characterized in** the step of
- applying said outer surface layer (7) being made of at least one of the compounds titanium nitride (TiN), titanium carbonitride (TiCN), chromium nitride (CrN), and titanium aluminium nitride (TiAIN) by a physical vapor deposition process.

9. A method according to claim 8, **wherein** said outer surface layer (7) has a thickness of about 0,5 - 50 µm.

10. A metallic washer for locking in bolted joints, the washer having a flat annular configuration with a central hole and on one side having a pattern of radially extending cams and on the other side having a pattern of radially extending teeth, **characterized in that** the washer (1) is coated with a corrosion resistant outer surface layer (7), the hardness of which exceeding the hardness of the material (6) to interact with the washer pattern of teeth (3) in a locking operation, wherein said outer surface layer is a layer of a nickel alloy, wherein said surface layer (7) comprises a nickel / phosphorus alloy, wherein said metallic washers being made of stainless steel, preferably an acid-proof stainless steel.

11. A washer according to claim 10, **wherein** a basic coating layer (310) of electrolytically applied pure nickel is provided under said surface layer (7) of a nickel alloy.

12. A washer according to claim 10, **wherein** said nickel / phosphorus alloy comprises about 2 - 14 % phosphorus by weight, preferably about 6 - 9 % phosphorus by weight.

13. A washer according to anyone of claims 10 - 12, **wherein** said outer washer surface layer (7) is applied by a so-called electroless nickel plating process, preferably by a so-called barrel plating process.

14. A washer according to anyone of claims 10 - 13, **wherein** said surface layer (7) is about 10 - 50 µm thick.

15. A washer according to anyone of claims 10 - 11, **wherein** said surface layer (7) is heat treated at about 400°C for about 1 hour or at 200 - 300°C for up to about 12 hours, preferably in an inert atmosphere and preferably to a hardness of about 1000 HV.

16. A metallic washer for locking in bolted joints, the washer having a flat annular configuration with a central hole and on one side having a pattern of radially extending cams and on the other side having a pattern of radially extending teeth, **characterized in that** the washer (1) is coated with a corrosion resistant outer surface layer (7), the hardness of which exceeding the hardness of the material (6) to interact with the washer pattern of teeth (3) in a locking operation, wherein said washer outer surface layer is applied by a physical vapor deposition (PVD), process, said layer being made of at least one of the compounds titanium nitride (TiN), titanium carbonitride (TiCN), chromium nitride (CrN), and titanium aluminium nitride (TiAIN).

17. A washer according to claim 16, wherein said surface layer (7) is about 0,5 - 50 µm thick.

## Patentansprüche

1. Verfahren zur Produktion von metallischen Unterlegscheiben (1) zum Verriegeln in Schraubenverbindungen, wobei die Unterlegscheiben eine ringförmige Konfiguration mit einem zentralen Loch (8) und auf einer Seite ein Muster von sich radial erstreckenden Nocken (10) und auf der anderen Seite ein Muster von sich radial erstreckenden Zähnen (3) aufweisen, **gekennzeichnet durch** die folgenden Schritte:
- Beschichten einer Charge der Unterlegscheiben (1) mit einer korrosionsbeständigen äußeren Oberflächenschicht (7), deren Härte die Härte des Materials (6) übersteigt, um in einem Verriegelungsvorgang mit dem Unterlegscheibenmuster von Zähnen (3) zusammenzuwirken,
wobei die äußere Oberflächenschicht (7) eine Schicht aus einer Nickellegierung ist, wobei die äußere Unterlegscheibenoberflächenschicht (7) eine Nickel/Phosphor-Legierung ist,
- wobei die Unterlegscheiben aus rostfreiem Stahl, vorzugsweise säurebeständigem rostfreiem Stahl, bereitgestellt sind.

2. Verfahren nach Anspruch 1, **wobei** die äußere Unterlegscheibenoberflächenschicht (7) eine Nickel/Phosphor-Legierung ist, die etwa 2 bis 14 Gew.-% Phosphor, vorzugsweise etwa 6 bis 9 Gew.-% Phosphor, umfasst.

3. Verfahren nach Anspruch 1 oder 2, **wobei** die äußere Unterlegscheibenoberflächenschicht (7) durch ein sogenanntes stromloses Vernickelungsverfahren, vorzugsweise durch sogenannte Trommelgalvanisierung, aufgebracht wird.

4. Verfahren nach einem der Ansprüche 1 bis 3, **gekennzeichnet durch** die folgenden Schritte:
- Reinigen der Unterlegscheibenoberfläche in einem Reinigungsvorgang (440); und dann, vorzugsweise, - elektrolytisches Aufbringen einer Schicht (310) aus reinem Nickel vor dem Bereitstellen der äußeren Unterlegscheibenoberflächenschicht (7) aus der Nickellegierung.

5. Verfahren nach einem der Ansprüche 1 bis 4, **gekennzeichnet durch** die folgenden Schritte:
- Aufbringen einer äußeren Unterlegscheibenoberflächenschicht (7) mit einer Dicke von etwa 10 bis 50 µm.

6. Verfahren nach einem der Ansprüche 2 bis 5, **gekennzeichnet durch** die folgenden Schritte:
- Wärmebehandeln der äußeren Unterlegscheibenoberflächenschicht (7) der Unterlegscheiben bei etwa 400 °C für etwa 1 Stunde oder bei 200 bis 300 °C für bis zu etwa 12 Stunden.

7. Verfahren nach Anspruch 6, **wobei** die äußere Unterlegscheibenoberflächenschicht auf eine Härte von etwa 1000 HV wärmebehandelt wird.

8. Verfahren zur Produktion von metallischen Unterlegscheiben (1) zum Verriegeln in Schraubenverbindungen, wobei die Unterlegscheiben eine ringförmige Konfiguration mit einem zentralen Loch (8) und auf einer Seite ein Muster von sich radial erstreckenden Nocken (10) und auf der anderen Seite ein Muster von sich radial erstreckenden Zähnen (3) aufweisen, **gekennzeichnet durch**
- Beschichten einer Charge der Unterlegscheiben (1) mit einer korrosionsbeständigen äußeren Oberflächenschicht (7), deren Härte die Härte des Materials (6) übersteigt, um in einem Verriegelungsvorgang mit dem Unterlegscheibenmuster von Zähnen (3) zusammenzuwirken, ferner **gekennzeichnet durch den Schritt:**
- Aufbringen der äußeren Oberflächenschicht (7), die aus mindestens einer der Verbindungen Titannitrid (TiN), Titancarbonitrid (TiCN), Chromnitrid (CrN) und Titanaluminiumnitrid (TiAIN) besteht, durch ein physikalisches Dampfabscheidungsverfahren.

9. Verfahren nach Anspruch 8, **wobei** die äußere Oberflächenschicht (7) eine Dicke von etwa 0,5 bis 50 µm aufweist.

10. Metallische Unterlegscheibe zum Verriegeln in Schraubenverbindungen, wobei die Unterlegscheibe eine flache ringförmige Konfiguration mit einem zentralen Loch und auf einer Seite ein Muster von sich radial erstreckenden Nocken und auf der anderen Seite ein Muster von sich radial erstreckenden Zähnen aufweist, **dadurch gekennzeichnet dass** die Unterlegscheibe (1) mit einer korrosionsbeständigen äußeren Oberflächenschicht (7) beschichtet ist, deren Härte die des Materials (6) übersteigt, um in einem Verriegelungsvorgang mit dem Unterlegscheibenmuster von Zähnen (3) zusammenzuwirken, wobei die Oberflächenschicht (7) eine Nickel/Phosphor-Legierung umfasst, wobei die metallischen Unterlegscheiben aus rostfreiem Stahl, vorzugsweise einem säurebeständigem rostfreiem Stahl, sind.

11. Unterlegscheibe nach Anspruch 10, **wobei** eine basische Beschichtungsschicht (310) aus elektrolytisch aufgebrachtem reinem Nickel unter der Oberflächenschicht (7) aus einer Nickellegierung bereitgestellt ist.

12. Unterlegscheibe nach Anspruch 10, **wobei** die Nickel/Phosphor-Legierung etwa 2 bis 14 Gew.-% Phosphor, vorzugsweise etwa 6 bis 9 Gew.-% Phosphor, umfasst.

13. Unterlegscheibe nach einem der Ansprüche 10 bis 12, **wobei** die äußere Unterlegscheibenoberflächenschicht (7) durch ein sogenanntes stromloses Vernickelungsverfahren, vorzugsweise durch sogenannte Trommelgalvanisierung, aufgebracht wird.

14. Unterlegscheibe nach einem der Ansprüche 10 bis 13, **wobei** die Oberflächenschicht (7) etwa 10 bis 50 µm dick ist.

15. Unterlegscheibe nach einem der Ansprüche 10 bis 11, **wobei** die Oberflächenschicht (7) bei etwa 400 °C für etwa 1 Stunde oder bei 200 bis 300 °C für bis zu etwa 12 Stunden wärmebehandelt wird, vorzugsweise in einer inerten Atmosphäre und vorzugsweise bis zu einer Härte von etwa 1000 HV.

16. Metallische Unterlegscheibe zum Verriegeln in Schraubenverbindungen, wobei die Unterlegscheibe eine flache ringförmige Konfiguration mit einem zentralen Loch und auf einer Seite ein Muster von sich radial erstreckenden Nocken und auf der anderen Seite ein Muster von sich radial erstreckenden Zähnen aufweist, **dadurch gekennzeichnet, dass** die Unterlegscheibe (1) mit einer korrosionsbeständigen äußeren Oberflächenschicht (7) beschichtet ist, deren Härte die des Materials (6) übersteigt, um in einem Verriegelungsvorgang mit dem Unterlegscheibenmuster von Zähnen (3) zusammenzuwirken, wobei die äußere Unterlegscheibenoberflächenschicht durch ein physikalisches Dampfabscheideverfahren (PVD) aufgebracht wird, wobei die Schicht aus mindestens einer der Verbindungen Titannitrid (TiN), Titancarbonitrid (TiCN), Chromnitrid (CrN) und Titanaluminiumnitrid (TiAIN) besteht.

17. Unterlegscheibe nach Anspruch 16, wobei die Oberflächenschicht (7) etwa 0,5 bis 50 µm dick ist.

## Revendications

1. Procédé de production de rondelles métalliques (1) pour le blocage de joints boulonnés, les rondelles ayant une configuration annulaire avec un trou central (8) et sur un côté un motif de cames s'étendant radialement (10) et sur l'autre côté ayant un motif de dents s'étendant radialement (3), **caractérisé par** les étapes consistant à :
- revêtir un lot des rondelles (1) avec une couche superficielle externe résistante à la corrosion (7), dont la dureté dépasse la dureté du matériau (6) pour interagir avec le motif de dents (3) de la rondelle dans une opération de blocage,
dans lequel ladite couche superficielle externe (7) est une couche d'un alliage de nickel, dans lequel ladite couche superficielle externe de rondelle (7) est un alliage de nickel/phosphore,
- dans lequel lesdites rondelles sont fournies en acier inoxydable, de préférence en acier inoxydable résistant aux acides.

2. Procédé selon la revendication 1, **dans lequel** ladite couche superficielle externe de rondelle (7) est un alliage de nickel/phosphore comprenant environ 2 à 14 % de phosphore en poids, de préférence environ 6 à 9 % de phosphore en poids.

3. Procédé selon la revendication 1 ou 2, **dans lequel** ladite couche superficielle externe de rondelle (7) est appliquée par ce que l'on appelle un processus de dépôt autocatalytique de nickel, de préférence par ce que l'on appelle un placage au tonneau.

4. Procédé selon l'une quelconque des revendications 1 à 3, **caractérisé par** les étapes consistant à
- nettoyer la surface de rondelle dans une opération de nettoyage (440) ; puis, de préférence, - appliquer par voie électrolytique une couche (310) de nickel pur avant fourniture de ladite couche superficielle externe de rondelle (7) dudit alliage de nickel.

5. Procédé selon l'une quelconque des revendications 1 à 4, **caractérisé par** l'étape consistant à
- appliquer une couche superficielle externe de rondelle (7) ayant une épaisseur d'environ 10 à 50 µm.

6. Procédé selon l'une quelconque des revendications 2 à 5, **caractérisé par** l'étape consistant à
- réaliser un traitement thermique de ladite couche superficielle externe de rondelle (7) desdites rondelles à environ 400 °C pendant environ 1 heure ou à 200 à 300 °C pendant jusqu'à environ 12 heures.

7. Procédé selon la revendication 6, **dans lequel** ladite couche superficielle externe de rondelle est traitée thermiquement à une dureté d'environ 1000 HV.

8. Procédé de production de rondelles métalliques (1) pour le blocage de joints boulonnés, les rondelles ayant une configuration annulaire avec un trou central (8) et sur un côté un motif de cames s'étendant radialement (10) et sur l'autre côté ayant un motif de dents s'étendant radialement (3), **caractérisé par**
- le revêtement d'un lot des rondelles (1) avec une couche superficielle externe résistante à la corrosion (7), dont la dureté dépasse la dureté du matériau (6) pour interagir avec le motif de dents (3) de la rondelle dans une opération de blocage, **caractérisé en outre en** l'étape consistant à
- appliquer ladite couche superficielle externe (7) étant constituée d'au moins l'un des composés nitrure de titane (TiN), carbonitrure de titane (TiCN), nitrure de chrome (CrN) et nitrure de titane-aluminium (TiAlN) par un processus de dépôt physique en phase vapeur.

9. Procédé selon la revendication 8, **dans lequel** ladite couche superficielle externe (7) a une épaisseur d'environ 0,5 à 50 µm.

10. Rondelle métallique pour le blocage de joints boulonnés, la rondelle ayant une configuration annulaire plate avec un trou central et sur un côté ayant un motif de cames s'étendant radialement et sur l'autre côté ayant un motif de dents s'étendant radialement, **caractérisée en ce que** la rondelle (1) est revêtue d'une couche superficielle externe résistante à la corrosion (7), dont la dureté dépasse la dureté du matériau (6) pour interagir avec le motif de dents (3) de la rondelle dans une opération de blocage, dans laquelle ladite couche superficielle externe est une couche d'un alliage de nickel, dans laquelle ladite couche superficielle (7) comprend un alliage de nickel/phosphore, dans laquelle lesdites rondelles métalliques sont constituées d'acier inoxydable, de préférence d'acier inoxydable résistant aux acides.

11. Rondelle selon la revendication 10, **dans laquelle** une couche de revêtement de base (310) de nickel pur appliqué par voie électrolytique est fournie sous ladite couche superficielle (7) d'un alliage de nickel.

12. Rondelle selon la revendication 10, **dans laquelle** ledit alliage de nickel/phosphore comprend environ 2 à 14 % de phosphore en poids, de préférence environ 6 à 9 % de phosphore en poids.

13. Rondelle selon l'une quelconque des revendications 10 à 12, **dans laquelle** ladite couche superficielle externe de rondelle (7) est appliquée par ce que l'on appelle un processus de dépôt autocatalytique de nickel, de préférence par ce que l'on appelle un processus de placage au tonneau.

14. Rondelle selon l'une quelconque des revendications 10 à 13, dans **laquelle** ladite couche superficielle (7) a une épaisseur d'environ 10 à 50 µm.

15. Rondelle selon l'une quelconque des revendications 10 à 11, **dans laquelle** ladite couche superficielle (7) est traitée thermiquement à environ 400 °C pendant environ 1 heure ou à 200 à 300 °C pendant jusqu'à environ 12 heures, de préférence dans une atmosphère inerte et de préférence à une dureté d'environ 1000 HV.

16. Rondelle métallique pour le blocage de joints boulonnés, la rondelle ayant une configuration annulaire plate avec un trou central et sur un côté ayant un motif de cames s'étendant radialement et sur l'autre côté ayant un motif de dents s'étendant radialement, **caractérisée en ce que** la rondelle (1) est revêtue d'une couche superficielle externe résistante à la corrosion (7), dont la dureté dépasse la dureté du matériau (6) pour interagir avec le motif de dents (3) de la rondelle dans une opération de blocage, dans laquelle ladite couche superficielle externe de rondelle est appliquée par un processus de dépôt physique en phase vapeur (PVD), ladite couche étant constituée d'au moins l'un des composés nitrure de titane (TiN), carbonitrure de titane (TiCN), nitrure de chrome (CrN) et nitrure de titane-aluminium (TiAIN).

17. Rondelle selon la revendication 16, dans laquelle ladite couche superficielle (7) a une épaisseur d'environ 0,5 à 50 µm.
